(19) **Europäisches Patentamt / European Patent Office / Office européen des brevets**

(11) **EP 4 678 492 A1**

(12) **EUROPEAN PATENT APPLICATION**
published in accordance with Art. 153(4) EPC

(43) Date of publication:
**14.01.2026 Bulletin 2026/03**

(21) Application number: **24769682.6**

(22) Date of filing: **02.02.2024**

(51) International Patent Classification (IPC):
***B60W 20/20*** (2016.01)

(52) Cooperative Patent Classification (CPC):
**Y02T 10/62**

(86) International application number:
**PCT/CN2024/075612**

(87) International publication number:
**WO 2024/187986 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 CN 202310234369**

(71) Applicant: **Chongqing Changan Automobile Co., Ltd.**
**Chongqing 400023 (CN)**

(72) Inventors:
• **LIU, Bin**
  **Chongqing 400023 (CN)**
• **WANG, BoZhou**
  **Chongqing 400023 (CN)**
• **CAI, Jianwei**
  **Chongqing 400023 (CN)**

(74) Representative: **Barker Brettell LLP**
**100 Hagley Road**
**Edgbaston**
**Birmingham B16 8QQ (GB)**

(54) **TARGET DRIVING MODE DETERMINATION METHOD AND APPARATUS FOR HYBRID VEHICLE, VEHICLE, MEDIUM, AND DEVICE**

(57) A target driving mode determination method and apparatus for hybrid vehicle, a vehicle, a medium, and a device, a maximum power of the vehicle in different driving modes is obtained based on operating parameters of the vehicle, and then an optimum driving mode that meets a power acceleration demand of a driver is selected the maximum power of the vehicle in different driving modes. The method includes: acquiring operating parameters of the vehicle; determining a driver demand power based on the operating parameters of the vehicle; when it is recognized according to the driver demand power that the driver has a power acceleration demand, determining a maximum power of the vehicle in a series mode and a maximum power of the vehicle in a parallel mode based on the operating parameters of the vehicle; and determining a target driving mode of the hybrid vehicle from a dynamic performance perspective based on the maximum power of the vehicle in the series mode and the maximum power of the vehicle in the parallel mode.

FIG. 2

**Description**

This application claims priority to Chinese Patent Application No. 202310234369.8, filed with the China National Intellectual Property Administration on March 10, 2023 and entitled "TARGET DRIVING MODE DETERMINATION METHOD AND APPARATUS FOR HYBRID VEHICLE, VEHICLE, MEDIUM, AND DEVICE", the contents of which are hereby incorporated by reference in its entirety.

**TECHNICAL FIELD**

The present application relates to the field of hybrid vehicle control and, in particular, to a target driving mode determination method and apparatus for hybrid vehicle, a vehicle, a medium, and a device.

**BACKGROUND**

In recent years, driven by environmental protection and energy conservation considerations, hybrid vehicles have garnered increasing favor from manufacturers due to their technical advantages such as extended range and low fuel consumption.

Compared to traditional fuel-powered vehicles, hybrid vehicles incorporate batteries as an additional energy source, enabling them to deliver greater driving force. When a driver fully depresses an accelerator pedal for rapid acceleration or overtaking, they expect the vehicle to provide a greater power output. The power output of the vehicle is constrained by the operating state of the engine, the operating state of the driving motor, and the operating state of the battery, and the operating states of these three components are closely tied to the driving mode of the vehicle. Different driving modes can enable the engine, the drive motor, and the battery to operate in different states, resulting in different power system outputs that can be provided. Therefore, how to select a driving mode that can maximize the satisfaction of the driver's power demands has become an urgent problem to be solved for those in the field. A hybrid drive system is disclosed in CN101445043A, this scheme introduces setting a first predetermined state of charge SOC0, a second predetermined state of charge SOC1, and a third predetermined state of charge SOC2; comparing them with an actual SOC; setting a first predetermined vehicle speed Velo1 and a second predetermined vehicle speed Velo2, and comparing them with a current vehicle speed Velo, while considering whether an EV button can be pressed, to determine whether the driving mode of the vehicle is a pure electric EV mode, a series mode, or a parallel mode. The method provided in this scheme relies solely on the calibration settings of predetermined SOC and predetermined vehicle speed to determine the driving mode of the vehicle, without involving the content of determining the driving mode of the vehicle based on the driver's power acceleration demand.

**SUMMARY**

The present application provides a target driving mode determination method and apparatus for hybrid vehicle, a vehicle, a medium, and a device, which no longer relies merely on the accuracy of SOC and vehicle speed signals as well as calibration experience, but instead obtains the maximum power of the vehicle in different driving modes based on operating parameters of the vehicle by recognizing when a driver has a power acceleration demand, and then selects an optimum driving mode that meets the power acceleration demand of the driver based on the maximum power of the vehicle under different driving modes. The technical solution of the present application is as follows:

The present application provides a target driving mode determination method for a hybrid vehicle, where the hybrid vehicle at least includes: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the driving motor, and the method includes:

    acquiring operating parameters of the vehicle;
    determining a driver demand power based on the operating parameters of the vehicle; when it is recognized according to the driver demand power that the driver has a power acceleration demand, determining a maximum power of the vehicle in a series mode and a maximum power of the vehicle in a parallel mode based on the operating parameters of the vehicle; and
    determining a target driving mode of the hybrid vehicle from a dynamic performance perspective based on the maximum power of the vehicle in the series mode and the maximum power of the vehicle in the parallel mode.

Optionally, the method further includes:

when it is recognized according to the driver demand power that the driver has no power acceleration demand, determining a maximum power of the vehicle in a pure electric mode based on the operating parameters of the vehicle;

determining a target driving mode of the hybrid vehicle from a non-dynamic performance perspective based on the maximum power of the vehicle in the pure electric mode and the driver demand power.

Optionally, the operating parameters of the vehicle include: a maximum driving power of the driving motor at a current rotational speed, a maximum power of engine external characteristics, a maximum generating power of generator external characteristics, and an available driving power of the battery;

the step of determining the maximum power of the vehicle in the series mode based on the operating parameters of the vehicle includes:

adding a smaller value between the maximum power of the engine external characteristics and the maximum generating power of the generator external characteristics to the available driving power of the battery to obtain a sum value;

determining a smaller value between the sum value and the maximum driving power of the driving motor at the current rotational speed to be the maximum power of the vehicle in the series mode.

Optionally, the operating parameters of the vehicle include: a vehicle speed, a total speed ratio from the engine to the wheel end, a tire diameter, a maximum driving power of the driving motor at a current rotational speed, the available driving power of the battery, and the step of determining the maximum power of the vehicle in the parallel mode based on the operating parameters of the vehicle includes:

determining a maximum driving power at an engine target synchronous rotational speed based on the vehicle speed, the total speed ratio from the engine to the wheel end and the tire diameter;

adding a smaller value between the maximum driving power of the driving motor at the current rotational speed and the available driving power of the battery to the maximum driving power at the engine target synchronous rotational speed to obtain the maximum power of the vehicle in the parallel mode.

Optionally, the step of determining the maximum driving power at the engine target synchronous rotational speed based on the vehicle speed, the total speed ratio from the engine to the wheel end and the tire diameter includes:

determining an engine synchronous rotational speed based on the vehicle speed, the total speed ratio from the engine to the wheel end and the tire diameter;

determining a change rate of the engine synchronous rotational speed based on the engine synchronous rotational speed and an engine synchronous rotational speed determined before N preset cycles;

determining an engine target synchronous rotational speed based on the engine synchronous rotational speed and the change rate of the engine synchronous rotational speed;

determining the maximum driving power at the engine target synchronous rotational speed based on the engine target synchronous rotational speed.

Optionally, the engine synchronous rotational speed $Spd_{equi}$ is calculated by formula:

$$Spd_{equi} = VehSpd * 1000 * \eta / 60 / \pi / D,$$

where $VehSpd$ is the vehicle speed, $\eta$ is the total speed ratio from the engine to the wheel end, and D is the tire diameter.

Optionally, the change rate $SpdRate_{equi}$ of the engine synchronous rotational speed is calculated by formula:

$$SpdRate_{equi} = \frac{Spd_{equi} - Spd_{equi}^{z^{-N}}}{N},$$

where $Spd_{equi}$ is the engine synchronous rotational speed, $Spd_{equi}^{z^{-N}}$ is the engine synchronous rotational speed before N calculation cycles.

Optionally, the engine target synchronous rotational speed $TgtSynSpd$ is calculated by formula:

$$TgtSynSpd = \text{Spd}_{equi} + \text{SpdRate}_{equi} * \delta$$ ,

where $\text{Spd}_{equi}$ is the engine synchronous rotational speed, $\text{SpdRate}_{equi}$ is the change rate of the engine synchronous rotational speed, $\delta$ is a prediction factor, $\delta$ is a preset value.

Optionally, the operating parameters of vehicle further include: the vehicle speed, an accelerator pedal signal; the step of determining the driver demand power based on the operating parameters of the vehicle includes: determining the driver demand power based on the vehicle speed and the accelerator pedal signal.

Optionally, a specific process of recognizing according to the driver demand power that the driver has the power acceleration demand is:

if the driver demand power is greater than a preset power, it is determined that the driver has the power acceleration demand; conversely, it is determined that the driver has no power acceleration demand;
where the preset power is determined according to the vehicle speed and a real-time SOC of the battery.

Optionally, the step of determining the target driving mode of the hybrid vehicle from the dynamic performance perspective based on the maximum power of the vehicle in the series mode and the maximum power of the vehicle in the parallel mode includes:

if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determining that the target driving mode of the hybrid vehicle from the dynamic performance perspective is the series mode;
if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determining that the target driving mode of the hybrid vehicle from the dynamic performance perspective is the parallel mode.

Optionally, the operating parameters of the vehicle further include: an available driving power of the battery and a maximum driving power of the driving motor at a current rotational speed;
the step of determining the maximum power of the vehicle in the pure electric mode based on the operating parameters of the vehicle includes:
determining a smaller value between the available driving power of the battery and the maximum driving power of the driving motor at the current rotational speed to be the maximum power of the vehicle in the pure electric mode.

Optionally, the step of determining the target driving mode of the hybrid vehicle from the non-dynamic performance perspective based on the maximum power of the vehicle in the pure electric mode and the driver demand power includes:

if the driver demand power is less than the maximum power of the vehicle in the pure electric mode, determining that the target driving mode of the hybrid vehicle from the non-dynamic performance perspective is the pure electric mode;
if the driver demand power is greater than or equal to the maximum power of the vehicle in the pure electric mode, determining that the target driving mode of the hybrid vehicle from the non-dynamic performance perspective is a current driving mode of the vehicle.

The present application provides a target driving mode determination apparatus for a hybrid vehicle, where the hybrid vehicle at least includes: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the driving motor, and the apparatus includes:

an acquiring module, configured to acquire operating parameters of the vehicle;
a driver demand power determining module, configured to determine a driver demand power based on the operating parameters of the vehicle;
a first power determining module is configured to, when it is recognized according to the driver demand power that the driver has a power acceleration demand, determine a maximum power of the vehicle in a series mode and a maximum power of the vehicle in a parallel mode based on the operating parameters of the vehicle;
a first target driving mode determining module, configured to determine a target driving mode of the hybrid vehicle from a dynamic performance perspective based on the maximum power of the vehicle in the series mode and the maximum power of the vehicle in the parallel mode.

Optionally, the apparatus further includes:

a second power determining module, configured to, when it is recognized according to the driver demand power that the driver has no power acceleration demand, determine a maximum power of the vehicle in a pure electric mode based on the operating parameters of the vehicle;
a second target driving mode determining module, configured to determine a target driving mode of the hybrid vehicle from a non-dynamic performance perspective based on the maximum power of the vehicle in the pure electric mode and the driver demand power.

Optionally, the operating parameters of the vehicle include: a maximum driving power of the driving motor at a current rotational speed, a maximum power of engine external characteristics, a maximum generating power of generator external characteristics, and an available driving power of the battery;
the first power determining module includes:

a sum value determining unit, configured to add a smaller value between the maximum power of the engine external characteristics and the maximum generating power of the generator external characteristics to the available driving power of the battery to obtain a sum value;
a series mode maximum power determining unit, configured to determine a smaller value between the sum value and the maximum driving power of the driving motor at the current rotational speed to be the maximum power of the vehicle in the series mode.

Optionally, the first power determining module further includes:

a maximum driving power determining unit for an engine target synchronous rotational speed, configured to determine a maximum driving power at the engine target synchronous rotational speed based on the vehicle speed, the total speed ratio from the engine to the wheel end and the tire diameter;
a parallel mode maximum power determining unit, configured to add a smaller value between the maximum driving power of the driving motor at the current rotational speed and the available driving power of the battery to the maximum driving power at the engine target synchronous rotational speed to obtain the maximum power of the vehicle in the parallel mode.

Optionally, the first target driving mode determining module further includes:

a first target driving mode determining unit, configured to, if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determine that the target driving mode of the hybrid vehicle from the dynamic performance perspective is the series mode;
a second target driving mode determining unit, configured to, if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determine that the target driving mode of the hybrid vehicle from the dynamic performance perspective is the parallel mode.

Optionally, the operating parameters of the vehicle further include: an available driving power of the battery and a maximum driving power of the driving motor at a current rotational speed;
the second power determining module includes:
a pure electric mode maximum power determining unit, configured to determine a smaller value between the available driving power of the battery and the maximum driving power of the driving motor at the current rotational speed to be the maximum power of the vehicle in the pure electric mode.

Optionally, the second target driving mode determining module includes:

a third target driving mode determining unit, configured to, if the driver demand power is less than the maximum power of the vehicle in the pure electric mode, determine that the target driving mode of the hybrid vehicle from the non-dynamic performance perspective is the pure electric mode;
a fourth target driving mode determining unit, configured to, if the driver demand power is greater than or equal to the maximum power of the vehicle in the pure electric mode, determine that the target driving mode of the hybrid vehicle from the non-dynamic performance perspective is a current driving mode of the vehicle.

The present application provides a vehicle, including the above target driving mode determination apparatus for the hybrid vehicle from the dynamic performance perspective.

The present application provides a control device, including a processor, a memory and a program or instructions stored in the memory and executable on the processor, and when the program or instructions are executed by the processor, steps of the target driving mode determination method for the hybrid vehicle described above are implemented.

The present application provides a readable storage medium, where a program or instructions are stored therein, and when the program or instructions are executed by a processor, steps of the target driving mode determination method for the hybrid vehicle described above are implemented.

The present application provides a computer program product, including a computer program, and when the computer program is executed by a processor, steps of the target driving mode determination method for the hybrid vehicle described above are implemented.

The beneficial effects of the present application are:
instead of solely relying on the accuracy of the SOC and speed signals as well as calibration experience, it predicts an engine target speed based on a state of the vehicle, calculates the maximum power of the vehicle in different driving modes, and improves the accuracy of the determination of the target driving mode.

Most of the prior arts rely on calibration experience to switch driving modes, especially when a driver has a power acceleration demand such as full throttle or overtaking, there is a problem of being unable to ensure that the vehicle can fully utilize its maximum driving capability. This solution can timely and accurately determine the target driving mode that can realize the maximum capacity of the vehicle when the driver has the power acceleration demand, so that the power acceleration demand of the driver can be maximally satisfied, and thus avoiding the emergence of the problem of user complaints due to insufficient vehicle acceleration feeling or powerless acceleration caused by failing to switch to an appropriate driving mode.

BRIEF DESCRIPTION OF DRAWINGS

FIG. 1 is a power architecture diagram of a hybrid vehicle with a P13 configuration.
FIG. 2 is a flowchart of a target driving mode determination method for a hybrid vehicle in a present embodiment.
FIG. 3 is a detailed flowchart of step S221 in a present embodiment.
FIG. 4 is a detailed flowchart of a target driving mode determination method for a hybrid vehicle in a present embodiment.
FIG. 5 is a structural block diagram of a hybrid vehicle driving mode control device in a present embodiment.

DETAILED DESCRIPTION OF EMBODIMENTS

Embodiments of the present application are illustrated below with reference to accompanying drawings and a preferred embodiment, and those skilled in the art can easily understand the other advantages and effects of the present application from the contents disclosed in the present specification. The present application may also be implemented or applied by different specific embodiments, and details in the present specification may also be modified or changed without deviating from the spirit of the present application based on different views and applications. It should be understood that the preferred embodiment is intended only to illustrate the present application and not to limit the scope of protection of the present application.

It should be noted that the illustrations provided in the following embodiments only illustrate the basic concept of the present application in a schematic manner, and only components related to the present application are shown in the illustrations, which are not drawn in accordance with the number, shape, and size of the components in actual implementation, and in an actual implementation, the type, the quantity, and the proportion of each component may be changed arbitrarily, and the layout type of the components may also be more complex.

Since hybrid vehicles in the prior art only take into account the combination of some calibration data of the vehicle for a selection of a driving mode of the vehicle, and there is no technical means for selecting an optimal driving mode to meet a power demand of a driver in combination with whether the driver has a power acceleration demand, the accuracy of a determination of a target driving mode of the vehicle is not high, leading to user complaints about insufficient acceleration feeling or powerless acceleration after switching the driving mode. In an embodiment of the present application, in order to solve the problem, a target driving mode determination method for a hybrid vehicle is provided, which no longer relies merely on the accuracy of the SOC and speed signals as well as calibration experience, but instead predicts an engine target rotational speed based on a state of the vehicle, and calculates the maximum power of the vehicle in different driving modes, thus improving the accuracy of the determination of the target driving mode. At the same time, the method of the present embodiment can timely and accurately determine the target driving mode that can realize the maximum capacity of the vehicle when the driver has a power acceleration demand, so that the power acceleration demand of the driver can be maximally satisfied, and thus avoiding the emergence of the problem of user complaints due to insufficient vehicle acceleration feeling or powerless acceleration caused by failing to switch to an appropriate driving mode.

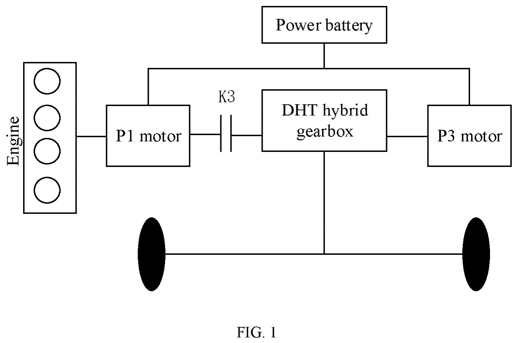

Referring to FIG. 1, a target driving mode determination method for a hybrid vehicle provided in the present embodiment is mainly applicable to a hybrid vehicle having the following features, the hybrid vehicle at least includes: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the driving motor. With specific reference to a P13 configuration hybrid vehicle of FIG. 1, the generator refers to P1 motor of FIG. 1, the driving motor refers to P3 motor of FIG. 1, and the clutch refers to K3 clutch of FIG. 1. For the P13 configuration hybrid vehicle, the P1 generator is coupled not only to the power battery but also to the P3 driving motor. In the present embodiment, the above hybrid vehicle may also be applicable to vehicles with other configurations, as long as the vehicles with these configurations have these specific features described above.

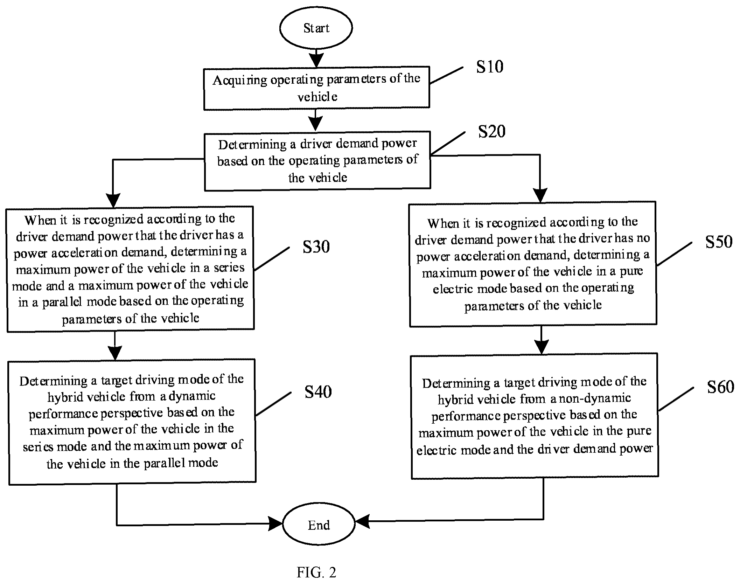

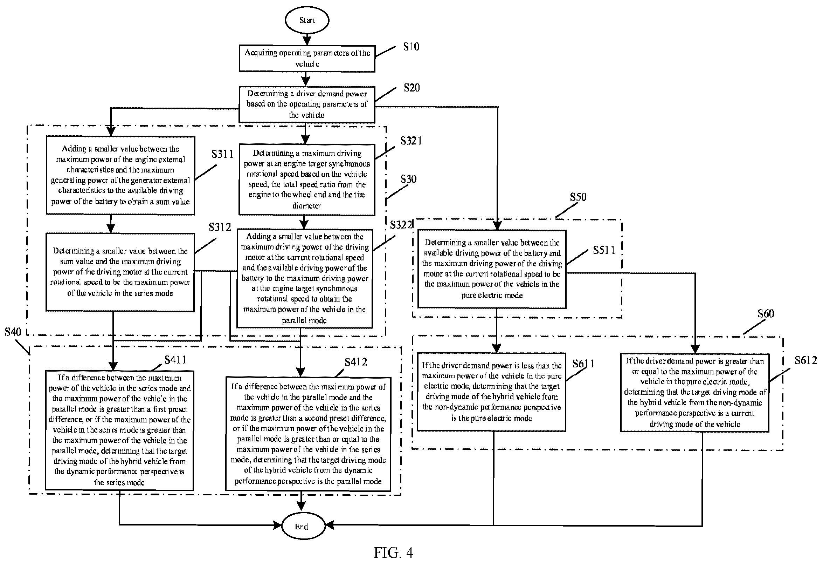

As shown in FIGS. 2 and 4, a target driving mode determination method for a hybrid vehicle provided in the present embodiment specifically includes:

Step S10, acquiring operating parameters of the vehicle.

In the present embodiment, the operating parameters of the vehicle specifically include these parameters as follows:

a vehicle speed, an accelerator pedal signal, an actual SOC of a battery, a total speed ratio from an engine to a wheel end, a tire diameter, a maximum driving power of a driving motor at a current rotational speed, a maximum power of engine external characteristics, a maximum generating power of generator external characteristics, and an available driving power of the battery.

Where, the above vehicle speed signal and the accelerator pedal signal are obtained from a real-time acquisition of relevant sensors on the vehicle, the tire diameter is a preset value, the total speed ratio from the engine to the wheel end is a preset value, the maximum driving power of the driving motor at the current rotational speed is obtained from an external characteristic curve of the driving motor, the actual SOC of the battery and the available driving power of the battery are obtained from a battery control unit, the maximum generating power of generator external characteristics is obtained from an external characteristic curve of the generator, and the maximum power of engine external characteristics is obtained from an external characteristic curve of the engine.

Step S20, determining a driver demand power based on the operating parameters of the vehicle.

Specifically, the driver demand power is determined based on the vehicle speed and the accelerator pedal signal. The driver demand power is obtained by looking up a table based on the vehicle speed and the accelerator pedal opening, a predetermined correspondence table of the vehicle speed and the accelerator pedal opening is pre-calibrated.

Step S30, when it is recognized according to the driver demand power that the driver has a power acceleration demand, determining a maximum power of the vehicle in a series mode and a maximum power of the vehicle in a parallel mode based on the operating parameters of the vehicle.

If the driver demand power exceeds a preset power, it is determined that the driver has the power acceleration demand, conversely, it is determined that the driver has no power acceleration demand. Where the preset power is determined based on the vehicle speed and the actual SOC of the battery, a predetermined correspondence table of the vehicle speed, the actual SOC of the battery and the preset power is pre-calibrated, and a specific value of the preset power is determined by looking up the predetermined correspondence table.

Specifically, the step of determining the maximum power of the vehicle in the series mode based on the operating parameters of the vehicle include:

step S311, adding a smaller value between the maximum power of the engine external characteristics and the maximum generating power of the generator external characteristics to the available driving power of the battery to obtain a sum value;

step S312, determining a smaller value between the sum value and the maximum driving power of the driving motor at the current rotational speed to be the maximum power of the vehicle in the series mode.

The step of determining the maximum power of the vehicle in the parallel mode based on the operating parameters of the vehicle include:

step S321, determining a maximum driving power at an engine target synchronous rotational speed based on the vehicle speed, the total speed ratio from the engine to the wheel end and the tire diameter;

step S322, adding a smaller value between the maximum driving power of the driving motor at the current rotational speed and the available driving power of the battery to the maximum driving power at the engine target synchronous rotational speed to obtain the maximum power of the vehicle in the parallel mode.

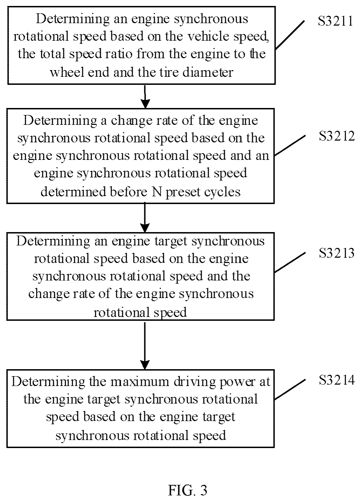

In conjunction with FIG. 3, the step S321 in the present embodiment specifically includes:

step S3211, determining an engine synchronous rotational speed based on the vehicle speed, the total speed ratio from the engine to the wheel end and the tire diameter;
step S3212, determining a change rate of the engine synchronous rotational speed based on the engine synchronous rotational speed and an engine synchronous rotational speed determined before N preset cycles;
step S3213, determining an engine target synchronous rotational speed based on the engine synchronous rotational speed and the change rate of the engine synchronous rotational speed;
step S3214, determining the maximum driving power at the engine target synchronous rotational speed based on the engine target synchronous rotational speed.

Further, $PwrMax_{SHEV}$ is the maximum power of the vehicle in the series mode, calculated as follows:

$$PwrMax_{SHEV} = \min[P3PwrMax, \min(EngPwrMax, P1GenPwrMax) + BattDrvPwr]$$

where $P3PwrMax$ is the maximum driving power of the driving motor at the current rotational speed, $EngPwrMax$ is the maximum power of the engine external characteristics, $P1GenPwrMax$ is the maximum generating power of the generator external characteristics, BattDrvPwr is the available driving power of the battery.

Further, $PwrMax_{PHEV}$ is the maximum power of the vehicle in the parallel mode, calculated as follows:

$$PwrMax_{PHEV} = EngPwrMax_{Synspd} + \min[P3PwrMax, BattDrvPwr]$$

where $EngPwrMax_{Synspd}$ is the maximum driving power of the engine target synchronous rotational speed, $P3PwrMax$ is the maximum driving power of the driving motor at the current rotational speed, $BattDrvPwr$ is the available driving power of the battery.

Further, $TgtSynSpd$ is the engine target synchronous rotational speed, calculated as follows:

$$TgtSynSpd = Spd_{equi} + SpdRate_{equi} * \delta$$

where $Spd_{equi}$ is the engine synchronous rotational speed, $\delta$ is a prediction factor, is a calibrated value, such as 1.

Further, $SpdRate_{equi}$ is the change rate of the engine synchronous rotational speed, calculated as follows:

$$SpdRate_{equi} = \frac{Spd_{equi} - Spd_{equi}^{z^{-N}}}{N}$$

where $Spd_{equi}^{z^{-N}}$ is the engine synchronous rotational speed before N calculation cycles, is a calibrated value, such as 3.

Further, $Spd_{equi}$ is the engine synchronous rotational speed, calculated as follows:

$$Spd_{equi} = VehSpd * 1000 * \eta / 60 / \pi / D$$

where $VehSpd$ is the vehicle speed, $\eta$ is the total speed ratio from the engine to the wheel end, and D is the tire diameter.

Step 40, determining a target driving mode of the hybrid vehicle from a dynamic performance perspective based on the maximum power of the vehicle in the series mode and the maximum power of the vehicle in the parallel mode.

Specifically, if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, it is determined that the target driving mode of the hybrid vehicle from the dynamic performance perspective is the series mode;

if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, it is determined that the target driving mode of the hybrid vehicle from the dynamic performance perspective is the parallel mode.

That is, if $(PwrMax_{SHEV} - PwrMax_{PHEV}) \geq TBD1$ (the first preset difference), $TBD1$ is a calibrated value, such as 2Kw, or, if $PwrMax_{SHEV} > PwrMax_{PHEV}$, then it is output that the target driving mode is the series mode.

Further, if $(PwrMax_{PHEV} - PwrMax_{SHEV}) \geq TBD2$ (the second predetermined difference), $TBD2$ is a calibrated value, such as 2Kw, or, if $PwrMax_{PHEV} \geq PwrMax_{SHEV}$, then it is output that the target driving mode is the parallel mode.

Step S50, when it is recognized according to the driver demand power that the driver has no power acceleration demand, determining a maximum power of the vehicle in a pure electric mode based on the operating parameters of the vehicle.

In the present embodiment, step S50 specifically includes:

step S511, determining a smaller value between the available driving power of the battery and the maximum driving power of the driving motor at the current rotational speed to be the maximum power of the vehicle in the pure electric mode.

Step S60, determining a target driving mode of the hybrid vehicle from a non-dynamic performance perspective based on the maximum power of the vehicle in the pure electric mode and the driver demand power.

In the present embodiment, the non-dynamic performance perspective may be an economic perspective or other perspectives.

In the present embodiment, the priority of the target driving mode of the hybrid vehicle from the non-dynamic performance perspective is higher than the target driving mode of the hybrid vehicle from the non-dynamic performance perspective.

In the present embodiment, step S60 specifically includes:

step S611, if the driver demand power is less than the maximum power of the vehicle in the pure electric mode, determining that the target driving mode of the hybrid vehicle from the non-dynamic performance perspective is the pure electric mode;

step S612, if the driver demand power is greater than or equal to the maximum power of the vehicle in the pure electric mode, determining that the target driving mode of the hybrid vehicle from the non-dynamic performance perspective is a current driving mode of the vehicle.

The method described above in the present embodiment can timely and accurately determine the target driving mode that can realize the maximum capacity of the vehicle when the driver has a power acceleration demand, so that the power acceleration demand of the driver can be maximally satisfied, and thus avoiding the emergence of the problem of user complaints due to insufficient vehicle acceleration feeling or powerless acceleration caused by failing to switch to an appropriate driving mode.

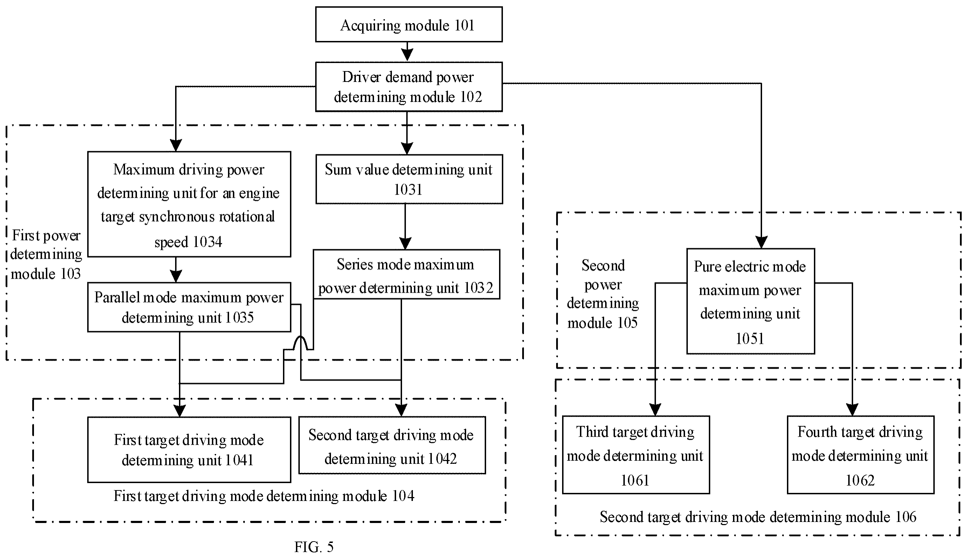

As shown in FIG. 5, an embodiment of the present application also provide a target driving mode determination apparatus for a hybrid vehicle from a dynamic performance perspective, where the hybrid vehicle at least includes: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the generator. As shown in FIG. 4, the apparatus includes:

an acquiring module 101, configured to acquire operating parameters of the vehicle;

a driver demand power determining module 102, configured to determine a driver demand power based on the operating parameters of the vehicle;

a first power determining module 103, configured to, when it is recognized according to the driver demand power that the driver has a power acceleration demand, determine a maximum power of the vehicle in a series mode and a maximum power of the vehicle in a parallel mode based on the operating parameters of the vehicle;

a first target driving mode determining module 104, configured to determine a target driving mode of the hybrid vehicle from a dynamic performance perspective based on the maximum power of the vehicle in the series mode and the maximum power of the vehicle in the parallel mode.

Optionally, the apparatus further includes:

a second power determining module 105, configured to, when it is recognized according to the driver demand power that the driver has no power acceleration demand, determine a maximum power of the vehicle in a pure electric mode based on the operating parameters of the vehicle;

a second target driving mode determining module 106, configured to determine a target driving mode of the hybrid vehicle from a non-dynamic performance perspective based on the maximum power of the vehicle in the pure electric mode and the driver demand power.

Optionally, the operating parameters of the vehicle include: the maximum driving power of the driving motor at a current rotational speed, a maximum power of engine external characteristics, a maximum generating power of generator external characteristics, and an available driving power of the battery.

Optionally, the first power determining module 103 includes:

a sum value determining unit 1031, configured to add a smaller value between the maximum power of the engine external characteristics and the maximum generating power of the generator external characteristics to the available driving power of the battery to obtain a sum value;

a series mode maximum power determining unit 1032, configured to determine a smaller value between the sum value and the maximum driving power of the driving motor at the current rotational speed to be the maximum power of the vehicle in the series mode.

Optionally, the first power determining module 103 further includes:

a maximum driving power determining unit for an engine target synchronous rotational speed 1034, configured to determine a maximum driving power at the engine target synchronous rotational speed based on the vehicle speed, the total speed ratio from the engine to the wheel end and the tire diameter;

a parallel mode maximum power determining unit 1035, configured to add a smaller value between the maximum driving power of the driving motor at the current rotational speed and the available driving power of the battery to the maximum driving power at the engine target synchronous rotational speed to obtain the maximum power of the vehicle in the parallel mode.

the operating parameters of the vehicle further include: the available driving power of the battery and the maximum driving power of the driving motor at the current rotational speed;

Optionally, the first target driving mode determining module 104 further includes:

a first target driving mode determining unit 1041, configured to, if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determine that the target driving mode of the hybrid vehicle from the dynamic performance perspective is the series mode;

a second target driving mode determining unit 1042, configured to, if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determine that the target driving mode of the hybrid vehicle from the dynamic performance perspective is the parallel mode.

Optionally, the second power determining module 105 includes:
a pure electric mode maximum power determining unit 1051, configured to determine a smaller value between the available driving power of the battery and the maximum driving power of the driving motor at the current rotational speed to be the maximum power of the vehicle in the pure electric mode.

Optionally, the second target driving mode determining module 106 includes:

a third target driving mode determining unit 1061, configured to, if the driver demand power is less than the maximum power of the vehicle in the pure electric mode, determine that the target driving mode of the hybrid vehicle from the non-dynamic performance perspective is the pure electric mode;

a fourth target driving mode determining unit 1062, configured to, if the driver demand power is greater than or equal to the maximum power of the vehicle in the pure electric mode, determine that the target driving mode of the hybrid vehicle from the non-dynamic performance perspective is a current driving mode of the vehicle.

In the apparatus described above in the present embodiment, the modules can use the specific steps of the method in the above embodiment during the execution of specific logical processes, and the apparatus has the same technical effect as the method described above.

The present application also provides a vehicle including the above target driving mode determination method apparatus for a hybrid vehicle.

The present application also provides a control device including a processor, a memory, and a program or instructions stored in the memory and executable on the processor, and when the program or instructions are executed by the processor, steps of the target driving mode determination method for the hybrid vehicle described above are implemented.

The present application also provides a readable storage medium, where a program or instructions are stored therein, and when the program or instructions are executed by a processor, steps of the target driving mode determination method for the hybrid vehicle described above are implemented.

The present application also provides a computer program product, including a computer program, and when the computer program is executed by a processor, steps of the target driving mode determination method for the hybrid vehicle described above are implemented.

The above are the preferred embodiments of the present application, and it should be noted that for a person of ordinary skill in the art, a number of improvements and refinements may also be made without departing from the principles described in the present application, and these improvements and refinements should also be regarded as falling within the scope of protection of the present application.

**Claims**

1. A target driving mode determination method for a hybrid vehicle, wherein the hybrid vehicle at least comprises: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the driving motor, and the method comprises:

   acquiring operating parameters of the vehicle;
   determining a driver demand power based on the operating parameters of the vehicle; when it is recognized according to the driver demand power that the driver has a power acceleration demand, determining a maximum power of the vehicle in a series mode and a maximum power of the vehicle in a parallel mode based on the operating parameters of the vehicle; and
   determining a target driving mode of the hybrid vehicle from a dynamic performance perspective based on the maximum power of the vehicle in the series mode and the maximum power of the vehicle in the parallel mode.

2. The target driving mode determination method for the hybrid vehicle according to claim 1, wherein the method further comprises:

   when it is recognized according to the driver demand power that the driver has no power acceleration demand, determining a maximum power of the vehicle in a pure electric mode based on the operating parameters of the vehicle;
   determining a target driving mode of the hybrid vehicle from a non-dynamic performance perspective based on the maximum power of the vehicle in the pure electric mode and the driver demand power.

3. The target driving mode determination method for the hybrid vehicle according to claim 1, wherein the operating parameters of the vehicle comprise: a maximum driving power of the driving motor at a current rotational speed, a maximum power of engine external characteristics, a maximum generating power of generator external characteristics, and an available driving power of the battery;
   wherein the step of determining the maximum power of the vehicle in the series mode based on the operating parameters of the vehicle comprises:

   adding a smaller value between the maximum power of the engine external characteristics and the maximum generating power of the generator external characteristics to the available driving power of the battery to obtain a sum value;
   determining a smaller value between the sum value and the maximum driving power of the driving motor at the current rotational speed to be the maximum power of the vehicle in the series mode.

4. The target driving mode determination method for the hybrid vehicle according to any one of claims 1 to 3, wherein the operating parameters of the vehicle comprise: a vehicle speed, a total speed ratio from the engine to the wheel end, a tire diameter, a maximum driving power of the driving motor at a current rotational speed, an available driving power of the battery, and the step of determining the maximum power of the vehicle in the parallel mode based on the operating parameters of the vehicle comprises:

   determining a maximum driving power at an engine target synchronous rotational speed based on the vehicle speed, the total speed ratio from the engine to the wheel end and the tire diameter;

adding a smaller value between the maximum driving power of the driving motor at the current rotational speed and the available driving power of the battery to the maximum driving power at the engine target synchronous rotational speed to obtain the maximum power of the vehicle in the parallel mode.

5. The target driving mode determination method for the hybrid vehicle according to claim 4, wherein the step of determining the maximum driving power at the engine target synchronous rotational speed based on the vehicle speed, the total speed ratio from the engine to the wheel end and the tire diameter comprises:

determining an engine synchronous rotational speed based on the vehicle speed, the total speed ratio from the engine to the wheel end and the tire diameter;

determining a change rate of the engine synchronous rotational speed based on the engine synchronous rotational speed and an engine synchronous rotational speed determined before N preset cycles;

determining an engine target synchronous rotational speed based on the engine synchronous rotational speed and the change rate of the engine synchronous rotational speed;

determining the maximum driving power at the engine target synchronous rotational speed based on the engine target synchronous rotational speed.

6. The target driving mode determination method for the hybrid vehicle according to claim 5, wherein the engine synchronous rotational speed $Spd_{equi}$ is calculated by formula:

$$Spd_{equi} = VehSpd*1000*\eta/60/\pi/D\,,$$

wherein VehSpd is the vehicle speed, $\eta$ is the total speed ratio from the engine to the wheel end, and D is the tire diameter.

7. The target driving mode determination method for the hybrid vehicle according to claim 5, wherein the change rate $SpdRate_{equi}$ of the engine synchronous rotational speed is calculated by formula:

$$SpdRate_{equi} = \frac{Spd_{equi} - Spd_{equi}^{Z^{-N}}}{N}\,,$$

wherein $Spd_{equi}$ is the engine synchronous rotational speed, $Spd_{equi}^{Z^{-N}}$ is the engine synchronous rotational speed before N calculation cycles.

8. The target driving mode determination method for the hybrid vehicle according to claim 5, wherein the engine target synchronous rotational speed $TgtSynSpd$ is calculated by formula:

$$TgtSynSpd = Spd_{equi} + SpdRate_{equi}*\delta\,,$$

wherein $Spd_{equi}$ is the engine synchronous rotational speed, $SpdRate_{equi}$ is the change rate of the engine synchronous rotational speed, $\delta$ is a prediction factor, $\delta$ is a preset value.

9. The target driving mode determination method for the hybrid vehicle according to any one of claims 1 to 8, wherein the operating parameters of vehicle further comprise: a vehicle speed, an accelerator pedal signal;

the step of determining the driver demand power based on the operating parameters of the vehicle comprises: determining the driver demand power based on the vehicle speed and the accelerator pedal signal.

10. The target driving mode determination method for the hybrid vehicle according to any one of claims 1 to 8, wherein a specific process of recognizing according to the driver demand power that the driver has the power acceleration demand is:

if the driver demand power is greater than a preset power, it is determined that the driver has the power acceleration demand; conversely, it is determined that the driver has no power acceleration demand;

wherein the preset power is determined according to the vehicle speed and a real-time SOC of the battery.

11. The target driving mode determination method for the hybrid vehicle according to claim 1, wherein the step of determining the target driving mode of the hybrid vehicle from the dynamic performance perspective based on the maximum power of the vehicle in the series mode and the maximum power of the vehicle in the parallel mode comprises:

if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determining that the target driving mode of the hybrid vehicle from the dynamic performance perspective is the series mode;

if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determining that the target driving mode of the hybrid vehicle from the dynamic performance perspective is the parallel mode.

12. The target driving mode determination method for the hybrid vehicle according to claim 2, wherein the operating parameters of the vehicle further comprise: an available driving power of the battery and a maximum driving power of the driving motor at a current rotational speed;

the step of determining the maximum power of the vehicle in the pure electric mode based on the operating parameters of the vehicle comprises:

determining a smaller value between the available driving power of the battery and the maximum driving power of the driving motor at the current rotational speed to be the maximum power of the vehicle in the pure electric mode.

13. The target driving mode determination method for the hybrid vehicle according to claim 2 or 12, wherein the step of determining the target driving mode of the hybrid vehicle from the non-dynamic performance perspective based on the maximum power of the vehicle in the pure electric mode and the driver demand power comprises:

if the driver demand power is less than the maximum power of the vehicle in the pure electric mode, determining that the target driving mode of the hybrid vehicle from the non-dynamic performance perspective is the pure electric mode;

if the driver demand power is greater than or equal to the maximum power of the vehicle in the pure electric mode, determining that the target driving mode of the hybrid vehicle from the non-dynamic performance perspective is a current driving mode of the vehicle.

14. A target driving mode determination apparatus for a hybrid vehicle, wherein the hybrid vehicle at least comprises: a power battery, an engine, a driving motor, a generator, and a clutch, the engine can be coupled or disconnected from a wheel end through the clutch, the driving motor is directly connected to the wheel end, the driving motor is connected to the power battery, the generator is connected to the engine, and the generator is connected to the power battery and/or the driving motor, and the apparatus comprises:

an acquiring module, configured to acquire operating parameters of the vehicle;

a driver demand power determining module, configured to determine a driver demand power based on the operating parameters of the vehicle;

a first power determining module, configured to, when it is recognized according to the driver demand power that the driver has a power acceleration demand, determine a maximum power of the vehicle in a series mode and a maximum power of the vehicle in a parallel mode based on the operating parameters of the vehicle;

a first target driving mode determining module, configured to determine a target driving mode of the hybrid vehicle from a dynamic performance perspective based on the maximum power of the vehicle in the series mode and the maximum power of the vehicle in the parallel mode.

15. The target driving mode determination apparatus for the hybrid vehicle according to claim 14, wherein the apparatus further comprises:

a second power determining module, configured to, when it is recognized according to the driver demand power that the driver has no power acceleration demand, determine a maximum power of the vehicle in a pure electric mode based on the operating parameters of the vehicle;

a second target driving mode determining module, configured to determine a target driving mode of the hybrid vehicle from a non-dynamic performance perspective based on the maximum power of the vehicle in the pure electric mode and the driver demand power.

16. The target driving mode determination apparatus for the hybrid vehicle according to claim 14, wherein the operating parameters of the vehicle comprise: a maximum driving power of the driving motor at a current rotational speed, a maximum power of engine external characteristics, a maximum generating power of generator external characteristics, and an available driving power of the battery;
the first power determining module comprises:

a sum value determining unit, configured to add a smaller value between the maximum power of the engine external characteristics and the maximum generating power of the generator external characteristics to the available driving power of the battery to obtain a sum value;
a series mode maximum power determining unit, configured to determine a smaller value between the sum value and the maximum driving power of the driving motor at the current rotational speed to be the maximum power of the vehicle in the series mode.

17. The target driving mode determination apparatus for the hybrid vehicle according to any one of claims 14 to 16, wherein the first power determining module further comprises:

a maximum driving power determining unit for an engine target synchronous rotational speed, configured to determine a maximum driving power at the engine target synchronous rotational speed based on the vehicle speed, the total speed ratio from the engine to the wheel end and the tire diameter;
a parallel mode maximum power determining unit, configured to add a smaller value between the maximum driving power of the driving motor at the current rotational speed and the available driving power of the battery to the maximum driving power at the engine target synchronous rotational speed to obtain the maximum power of the vehicle in the parallel mode.

18. The target driving mode determination apparatus for the hybrid vehicle according to claim 14, wherein the first target driving mode determining module further comprises:

a first target driving mode determining unit, configured to, if a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determine that the target driving mode of the hybrid vehicle from the dynamic performance perspective is the series mode;
a second target driving mode determining unit, configured to, if a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determine that the target driving mode of the hybrid vehicle from the dynamic performance perspective is the parallel mode.

19. The target driving mode determination apparatus for the hybrid vehicle according to claim 15, wherein the operating parameters of the vehicle further comprise: an available driving power of the battery and a maximum driving power of the driving motor at a current rotational speed;
the second power determining module comprises:
a pure electric mode maximum power determining unit, configured to determine a smaller value between the available driving power of the battery and the maximum driving power of the driving motor at the current rotational speed to be the maximum power of the vehicle in the pure electric mode.

20. The target driving mode determination apparatus for the hybrid vehicle according to claim 15 or 19, wherein the second target driving mode determining module comprises:

a third target driving mode determining unit, configured to, if the driver demand power is less than the maximum power of the vehicle in the pure electric mode, determine that the target driving mode of the hybrid vehicle from the non-dynamic performance perspective is the pure electric mode;
a fourth target driving mode determining unit, configured to, if the driver demand power is greater than or equal to the maximum power of the vehicle in the pure electric mode, determine that the target driving mode of the hybrid vehicle from the non-dynamic performance perspective is a current driving mode of the vehicle.

21. A vehicle, comprising: the target driving mode determination apparatus for the hybrid vehicle from a dynamic performance perspective according to any one of claims 14 to 20.

22. A control device, comprising: a processor, a memory and a program or instructions stored in the memory and executable on the processor, and when the program or instructions are executed by the processor, steps of the target driving mode determination method for the hybrid vehicle according to any one of claims 1 to 13 are implemented.

23. A readable storage medium, wherein a program or instructions are stored therein, and when the program or instructions are executed by a processor, steps of the target driving mode determination method for the hybrid vehicle according to any one of claims 1 to 13 are implemented.

24. A computer program product, wherein the computer program product comprises a computer program, when the computer program is executed by a processor, steps of the target driving mode determination method for the hybrid vehicle according to any one of claims 1 to 13 are implemented.

FIG. 1

Start

Acquiring operating parameters of the
vehicle ⟍ S10

Determining a driver demand power
based on the operating parameters of
the vehicle ⟍ S20

When it is recognized according to the
driver demand power that the driver has a
power acceleration demand, determining a
maximum power of the vehicle in a series
mode and a maximum power of the vehicle
in a parallel mode based on the operating
parameters of the vehicle ⟍ S30

When it is recognized according to the
driver demand power that the driver has no
power acceleration demand, determining a
maximum power of the vehicle in a pure
electric mode based on the operating
parameters of the vehicle ⟍ S50

Determining a target driving mode of the
hybrid vehicle from a dynamic
performance perspective based on the
maximum power of the vehicle in the
series mode and the maximum power of
the vehicle in the parallel mode ⟍ S40

Determining a target driving mode of the
hybrid vehicle from a non-dynamic
performance perspective based on the
maximum power of the vehicle in the pure
electric mode and the driver demand power ⟍ S60

End

FIG. 2

Determining an engine synchronous rotational speed based on the vehicle speed, the total speed ratio from the engine to the wheel end and the tire diameter — S3211

Determining a change rate of the engine synchronous rotational speed based on the engine synchronous rotational speed and an engine synchronous rotational speed determined before N preset cycles — S3212

Determining an engine target synchronous rotational speed based on the engine synchronous rotational speed and the change rate of the engine synchronous rotational speed — S3213

Determining the maximum driving power at the engine target synchronous rotational speed based on the engine target synchronous rotational speed — S3214

FIG. 3

Start

Acquiring operating parameters of the vehicle — S10

Determining a driver demand power based on the operating parameters of the vehicle — S20

S311 — Adding a smaller value between the maximum power of the engine external characteristics and the maximum generating power of the generator external characteristics to the available driving power of the battery to obtain a sum value

S321 — Determining a maximum driving power at an engine target synchronous rotational speed based on the vehicle speed, the total speed ratio from the engine to the wheel end and the tire diameter

S30

S312 — Determining a smaller value between the sum value and the maximum driving power of the driving motor at the current rotational speed to be the maximum power of the vehicle in the series mode

S322 — Adding a smaller value between the maximum driving power of the driving motor at the current rotational speed and the available driving power of the battery to the maximum driving power at the engine target synchronous rotational speed to obtain the maximum power of the vehicle in the parallel mode

S50

S511 — Determining a smaller value between the available driving power of the battery and the maximum driving power of the driving motor at the current rotational speed to be the maximum power of the vehicle in the pure electric mode

S40

S411 — If a difference between the maximum power of the vehicle in the series mode and the maximum power of the vehicle in the parallel mode is greater than a first preset difference, or if the maximum power of the vehicle in the series mode is greater than the maximum power of the vehicle in the parallel mode, determining that the target driving mode of the hybrid vehicle from the dynamic performance perspective is the series mode

S412 — If a difference between the maximum power of the vehicle in the parallel mode and the maximum power of the vehicle in the series mode is greater than a second preset difference, or if the maximum power of the vehicle in the parallel mode is greater than or equal to the maximum power of the vehicle in the series mode, determining that the target driving mode of the hybrid vehicle from the dynamic performance perspective is the parallel mode

S60

S611 — If the driver demand power is less than the maximum power of the vehicle in the pure electric mode, determining that the target driving mode of the hybrid vehicle from the non-dynamic performance perspective is the pure electric mode

S612 — If the driver demand power is greater than or equal to the maximum power of the vehicle in the pure electric mode, determining that the target driving mode of the hybrid vehicle from the non-dynamic performance perspective is a current driving mode of the vehicle

End

FIG. 4

Acquiring module 101

Driver demand power
determining module 102

First power
determining
module 103

Maximum driving power
determining unit for an engine
target synchronous rotational
speed 1034

Parallel mode maximum power
determining unit 1035

Sum value determining unit
1031

Series mode maximum
power determining unit 1032

Second
power
determining
module 105

Pure electric mode
maximum power
determining unit
1051

First target driving mode
determining unit 1041

Second target driving mode
determining unit 1042

First target driving mode determining module 104

Third target driving
mode determining unit
1061

Fourth target driving
mode determining unit
1062

Second target driving mode determining module 106

FIG. 5

## INTERNATIONAL SEARCH REPORT

| International application No. |
|---|
| **PCT/CN2024/075612** |

**A. CLASSIFICATION OF SUBJECT MATTER**

B60W20/20(2016.01)i

According to International Patent Classification (IPC) or to both national classification and IPC

**B. FIELDS SEARCHED**

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 动力加速, 方法, 混动, 混合动力, 驾驶员需求, 模式, 目标, 判定, 驱动, 需求, power w acceleration, method, hybrid, driver w demand, mode, objective, decision, drive, demand

**C. DOCUMENTS CONSIDERED TO BE RELEVANT**

| Category* | Citation of document, with indication, where appropriate, of the relevant passages | Relevant to claim No. |
|---|---|---|
| PX | CN 116215499 A (CHONGQING CHANG'AN AUTOMOBILE CO., LTD.) 06 June 2023 (2023-06-06)<br>claims 1-24 | 1-24 |
| Y | CN 112590528 A (BYD CO., LTD.) 02 April 2021 (2021-04-02)<br>description, paragraphs [0036]-[0159], and figures 1-13 | 1, 2, 9, 10, 12, 14, 15, 19, 21-24 |
| Y | CN 113320519 A (DONGFENG MOTOR GROUP CO., LTD.) 31 August 2021 (2021-08-31)<br>description, paragraphs [0022]-[0106], and figures 1-2 | 1, 2, 9, 10, 12, 14, 15, 19, 21-24 |
| A | CN 110304042 A (BEIJING INSTITUTE OF TECHNOLOGY) 08 October 2019 (2019-10-08)<br>description, paragraphs [0085]-[0150], and figures 1-13 | 1-24 |
| A | CN 109910868 A (CHONGQING CHANG'AN NEW ENERGY AUTOMOBILE TECHNOLOGY CO., LTD.) 21 June 2019 (2019-06-21)<br>entire document | 1-24 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **24 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 678 492 A1**

**INTERNATIONAL SEARCH REPORT**

| International application No. |
| --- |
| **PCT/CN2024/075612** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2014100730 A1 (HYUNDAI MOTOR CO., LTD.; KIA MOTORS CORP.;) 10 April 2014 (2014-04-10)<br>entire document | 1-24 |

**INTERNATIONAL SEARCH REPORT**
Information on patent family members

International application No.

**PCT/CN2024/075612**

| Patent document cited in search report | | | Publication date (day/month/year) | Patent family member(s) | | | Publication date (day/month/year) |
|---|---|---|---|---|---|---|---|
| CN | 116215499 | A | 06 June 2023 | None | | | |
| CN | 112590528 | A | 02 April 2021 | None | | | |
| CN | 113320519 | A | 31 August 2021 | None | | | |
| CN | 110304042 | A | 08 October 2019 | None | | | |
| CN | 109910868 | A | 21 June 2019 | None | | | |
| US | 2014100730 | A1 | 10 April 2014 | DE | 102012224435 | A1 | 10 April 2014 |
| | | | | KR | 20140044675 | A | 15 April 2014 |

Form PCT/ISA/210 (patent family annex) (July 2022)

**EP 4 678 492 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310234369

- CN 101445043 A